# EUROPÄISCHE PATENTSCHRIFT

(11) **EP 1 692 039 B1**
(45) Veröffentlichungstag und Bekanntmachung des Hinweises auf die Patenterteilung: **14.05.2008**
(21) Anmeldenummer: 04765626.9
(22) Anmeldetag: 25.09.2004
(51) Int. Cl.: B64D 11/06, B60N 3/00

(54) **FLUGGASTSITZ**
AIRCRAFT PASSENGER SEAT
SIEGE POUR PASSAGER D'AVION

(30) Priorität: 11.12.2003 DE 10358478
(43) Veröffentlichungstag der Anmeldung: 23.08.2006
(73) Patentinhaber: Recaro Aircraft Seating GmbH & Co. KG, 74523 Schwäbisch Hall (DE)
(72) Erfinder: SALZER, Uwe, 88682 Salem (DE); SCHÜRG, Hartmut, 74523 Schwäbisch Hall (DE)
(74) Vertreter: Daub, Thomas
(86) Internationale Anmeldenummer: PCT/EP2004/010797
(87) Internationale Veröffentlichungsnummer: WO 2005/061322

(56) Entgegenhaltungen:
- EP-A- 1 160 125
- DE-A- 10 132 282
- US-A- 3 632 161
- US-A- 4 852 940
- US-A- 4 944 552

## Beschreibung

Die Erfindung bezieht sich auf einen Fluggastsitz gemäß der Merkmalsausgestaltung des Oberbegriffes des Patentanspruches 1.

Ein dahingehender Fluggastsitz ist durch die DE 101 32 282 A bekannt. Bei Verkehrsflugzeugen mit Sitzreihen, in denen mehrere Sitze nebeneinander angeordnet sind, wird angestrebt, den nebeneinander sitzenden Fluggästen ein möglichst hohes Maß an Privatsphäre zur Verfügung zu stellen. Die Möglichkeit, aus der Konsole zwischen zwei nebeneinander liegenden Sitzen ein Trennelement auszufahren, liefert einen wesentlichen Beitrag zur Erreichung dieses Zieles. Die als Trennelement nach oben aus der Konsole ausgefahrene Platte bildet eine Art Abschirmung des Sitzbereiches gegenüber dem Sitzbereich des daneben angeordneten Fluggastsitzes. Durch die DE 101 32 282 A ist darüber hinaus bekannt, mittels einer vorgespannten Federanordnung den Ausfahrvorgang für das genannte Trennelement zu erleichtern.

Durch die US 4,944,552 A ist ein Fahrzeugsitz bekannt, bei dem aus einer Verstauposition, gebildet durch die Armlehne, eine Tischplatte herausziehbar ist, nach deren Verschwenken um eine horizontale Achse in eine Gebrauchsstellung eine nutzbare Tischfläche dem Sitzbenutzer zur Verfügung steht. Die bekannte Lösung weist hierfür einen Einstellmechanismus auf, der als Träger für die Tischplatte einen Arm aufweist, der mit der Tischkonsole um eine erste Achse und eine mit dieser einen rechten Winkel einschließende zweite Achse schwenkbar verbunden ist, von denen die erste Achse an der Konsole ortsfest angeordnet ist und horizontal und zur Hauptebene der Konsole senkrecht verläuft. Ferner ist die Platte am zugeordneten Ende des Armes für eine in Richtung der zweiten Achse verlaufende Verschiebebewegung entlang zweier Parallelführungen bewegbar gelagert ist, so dass der Tischbenutzer die Tischfläche von sich wegschieben und zu sich herziehen und im übrigen bei Bedarf entlang einer vertikal verlaufenden Achse die Platte auch hin- und herschwenken kann.

Die Möglichkeit, die Platte nicht nur als Trennelement zu benutzen, sondern nach Überführen in die Horizontalstellung auch als Tischfläche, um dergestalt durch die Doppelnutzung der Platte eine Gewicht und Raum sparende Bauweise zu erreichen, ist durch den erstgenannten Stand der Technik bekannt. Um diesen Forderungen gerecht zu werden, sind jedoch an die Gestaltung des Einstellmechanismus hohe Anforderungen zu stellen, insbesondere hinsichtlich Funktionssicherheit und leichter Bedienbarkeit.

Der Erfindung liegt daher die Aufgabe zugrunde, einen Fluggastsitz zu schaffen, der den an den Einstellmechanismus der Platte zu stellenden Anforderungen in besonders gutem Maße gerecht wird.

Dadurch, dass gemäß dem kennzeichnenden Teil des Patentanspruches 1 eine steuerbare Riegeleinrichtung zum lösbaren Festlegen der Platte in der Ruhestellung vorhanden ist und dass die Riegeleinrichtung ein durch Federkraft in die Sperrstellung vorgespanntes, bewegbares Riegelglied aufweist, das durch einen Seilzug aus der Sperrstellung bewegbar ist, der durch ein an der Konsole befindliches Steuerglied betätigbar ist, ist den genannten Anforderungen Rechnung getragen und insbesondere ist dergestalt ein funktionssicherer Gebrauch für den Einstellmechanismus realisiert nebst einer leichter Bedienbarkeit.

Die verschiebbare Lagerung der Platte an einem Arm, der mit der Konsole in der Weise gelenkig verbunden ist, dass er nicht nur eine Schwenkbewegung in der Hauptebene der Konsole, sondern in einer hierzu quer verlaufende Schwenkebene ausführen kann, führt zu einer Bauweise des Einstellmechanismus, die mit einer geringen Anzahl von Bauteilen eine funktionssichere Einstellung der Platte in sämtliche ihrer gewünschten Funktionsstellungen ermöglicht.

Eine besonders raumsparende Bauweise ergibt sich, wenn der Arm an seinem der Konsole zugeordneten Ende durch einen Fortsatz verlängert ist, der mit dem Arm um die zweite Achse schwenkbar gelenkig verbunden und an seinem anderen Ende mit der Konsole um die erste Achse schwenkbar verbunden ist.

Die Bedienung des Einstellmechanismus gestaltet sich für den Fluggast besonders einfach, wenn der Arm für eine Schwenkbewegung um die erste Achse im Sinne des Ausfahrens der Platte aus der Konsole durch eine Federanordnung vorgespannt ist und wenn eine steuerbare Riegeleinrichtung zum lösbaren Festlegen der Platte in der Ruhestellung vorhanden ist.

In besonders raumsparender Bauweise kann die Federanordnung eine auf der ersten Achse angeordnete, ein Drehmoment am Fortsatz des Armes erzeugende Schraubendrehfeder aufweisen.

Um eine noch vollständigere Abschirmung zwischen zwei nebeneinander liegenden Fluggastsitzen zu erreichen, kann zusätzlich zu der mit dem Träger verbundenen, als Trennelement dienenden Platte eine zweite Platte als weiteres Trennelement hinter der anderen Platte im Bereich von Rückenlehne und Kopfstütze vorgesehen sein, die aus der Konsole in eine nach oben geschwenkte Trennstellung ausfahrbar ist. Diese zweite Platte kann beispielsweise schwenkbar in der Konsole gelagert und an ihrem der vorderen Platte zugewandten Rand so geformt sein, dass sie sich beim Ausschwenken aus der Konsole an den zugewandten hinteren Rand der ersten Platte annähert oder anschmiegt und so eine im wesentlichen ununterbrochene Trennwand (englisch: privacy divider) zwischen nebeneinander liegenden Fluggastsitzen bildet.

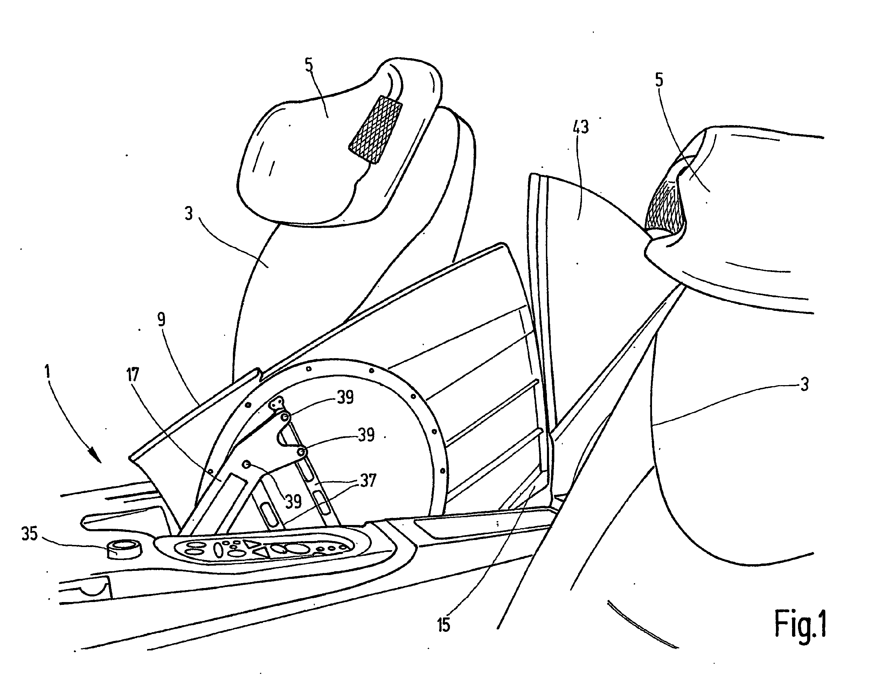

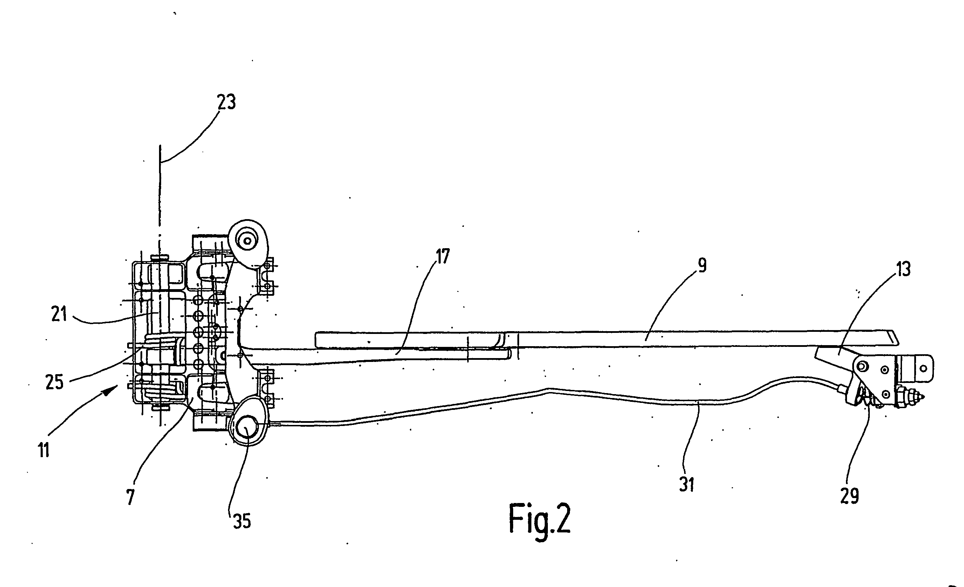

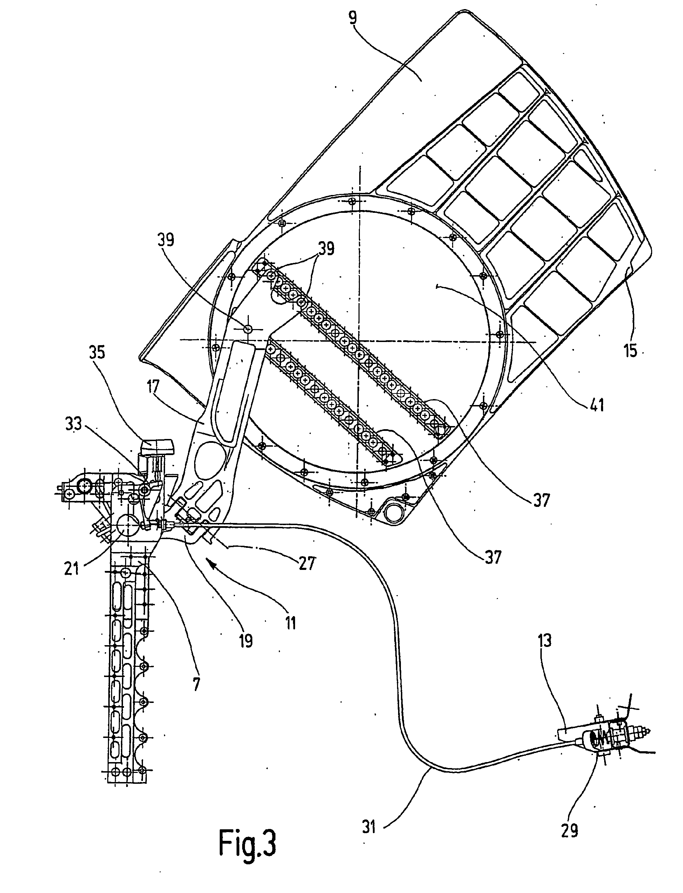

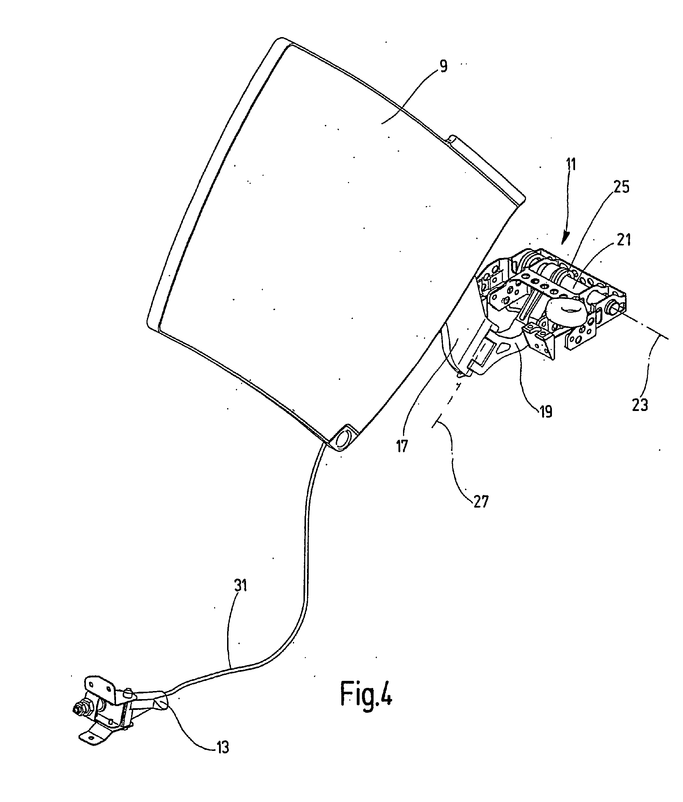

Nachstehend ist die Erfindung anhand eines in der Zeichnung dargestellten Ausführungsbeispieles im einzelnen erläutert. Es zeigen:
● Fig. 1 eine stark schematisch vereinfacht und perspektivisch gezeichnete Ansicht eines Teiles einer Konsole zwischen zwei Fluggastsitzen gemäß einem Ausführungsbeispiel der Erfindung;
**●** Fig. 2 eine Draufsicht der Trägerstruktur der Konsole des Ausführungsbeispieles, wobei nur eine von zwei aus der Konsole ausfahrbaren Platten mit zugehörigem Einstellmechanismus gezeigt ist und sich die Platte in ihrer eingefahrenen Ruhestellung befindet;
● Fig. 3 eine Seitenansicht von Fig. 2, wobei die Platte teilweise bis zu ihrer Trennstellung ausgefahren ist, und
**●** Fig. 4 eine perspektivische, schräge Teilansicht der teilweise ausgefahrenen Platte und deren Einstellmechanismus, gesehen auf die als Tischfläche dienende Oberseite der Platte.

Fig. 1 zeigt die dem Betrachter zugewandte Hälfte einer Mittelkonsole 1 zwischen zwei nebeneinander liegenden Fluggastsitzen, von denen jeweils nur der Sitzteil 3 mit Kopfstütze 5 angedeutet ist. Fig. 2 und 3 zeigen in Draufsicht bzw. in Seitenansicht eine in die Konsole 1 eingebaute Trägerstruktur 7 für die Einstellmechanismen von in die Konsole einfahrbaren Platten. Von diesen ist in den vorliegenden Fig. lediglich eine Platte 9 gezeigt, die dem in Fig. 1 dem Betrachter nächstgelegenen Fluggastsitz zugehörig ist. In Fig. 1 und 3 ist die Unterseite dieser Platte 9 und in Fig. 4 die Oberseite dieser Platte 9 gezeigt. In Fig. 2 bis 4 ist der Einstellmechanismus, der die Einstellung der Platte 9 in verschiedene Funktionsstellungen ermöglicht, als Ganzes mit 11 bezeichnet. Dem in Fig. 1 vom Betrachter ferner gelegenen Fluggastsitz ist eine der Platte 9 gleiche Platte (nicht gezeigt) zugeordnet, deren (nicht gezeigter) Einstellmechanismus, der dem Einstellmechanismus 11 der gezeigten Platte 9 entspricht, ebenfalls an der Trägerstruktur 7 angeordnet ist.

Die Fig. 2 zeigt die Platte 9 in ihrer in die Konsole vollständig eingefahrenen Ruhestellung, in der sie durch Eingriff eines beweglichen Riegelgliedes 13 in eine Rastkerbe 15 an der Unterseite der Platte 9 gesichert ist. Der Einstellmechanismus 11 der Platte 9 weist als Träger für dieselbe einen Arm 17 auf, dessen von der Platte 9 abgekehrtes Ende durch einen Fortsatz 19 verlängert ist. Das dem Arm 17 entgegengesetzte Ende des Fortsatzes 19 ist auf einem Achszapfen 21 um eine erste Achse 23 schwenkbar gelagert. Dieser die Achse 23 definierende Achszapfen 21 ist in der Konsole 1 ortsfest, horizontal und zur Hauptebene der Konsole 1 senkrecht verlaufend angeordnet.

Der Achszapfen 21 ist von einer Schrauben-Drehfeder 25 umgeben, die den Fortsatz 19 und damit den mit ihr verbundenen Arm 17 für eine Schwenkbewegung vorspannt, die die Platte 9 aus ihrer eingefahrenen Ruhestellung heraus nach oben bewegt. Die Verbindung zwischen dem Fortsatz 19 und dem Arm 17 ist gelenkig, wobei die in Fig. 3 und 4 mit 27 bezeichnete Gelenkachse mit der ersten Achse 23 im Raum einen rechten Winkel einschließt, siehe Fig. 4. Gegen die durch die Drehfeder 25 bewirkte Schwenkbewegung sind Fortsatz 19 und der mit ihm gelenkig verbundene Arm 17 mittels des bereits erwähnten, mit der Platte 9 zusammenwirkenden Riegelgliedes 13, siehe Fig. 2, gesichert, das die Platte 9 und damit den mit ihr verbundenen Arm 17 in der in die Konsole eingefahrenen Ruhestellung festlegt. Das Riegelglied 13 ist gegen die Kraft einer Druckfeder 29 aus der Sperrstellung mittels eines Seilzuges 31 aushebbar, der über einen Winkelhebel 33 mittels einer an der Konsole befindlichen Drucktaste 35 betätigbar ist.

Wie aus Fig. 1 und 3 zu entnehmen ist, ist die Platte 9 an ihrer Unterseite über eine Verschiebeführung mit dem zugeordneten Ende des Armes 17 geradlinig verschiebbar verbunden. Seitens der Platte 9 weist diese Führung zwei im Abstand nebeneinander liegende, sich in Verschieberichtung geradlinig erstreckende Führungsschienen 37 auf, in denen Führungsrollen 39 geführt sind, die am Arm 17 gelagert sind. Damit eine geradlinige Zwangsführung gebildet wird, sind in der einen Führungsschiene 37 zwei Rollen 39 gelagert, und in der anderen Führungsschiene 37 befindet sich eine Rolle 39. Bei den Führungsschienen 37 handelt sich um Profilschienen, deren Endränder nach einwärts gezogen sind, so dass eine C-artige Profilform gebildet wird, wodurch die Rollen 39 gegen Ausheben aus den Führungsschienen 37 gesichert sind.

Wie aus Fig. 1 und 3 erkennbar ist, befinden sich die Führungsschienen 37 an einem Drehteller 41, der an der Unterseite der Platte 9 eine Drehscheibe bildet, so dass die Platte 9 mit dem Arm 17 sowohl verschiebbar als auch drehbar verbunden ist.

Um die Platte 9 aus der in Fig. 2 gezeigten, versenkten Ruhestellung heraus zu bewegen, drückt der Benutzer des Fluggastsitzes die Drucktaste 35, um die Verriegelung der Platte 9 durch Ausheben des Riegelgliedes 13 zu lösen. Aufgrund des durch die Drehfeder 25 bewirkten Drehmomentes schwenkt der Fortsatz 19 mit dem Arm 17 nach oben in die in Fig. 1, 3 und 4 gezeigte Zwischenstellung, die der Trennstellung der Platte 9 entspricht. In dieser kehrt die Platte 9 dem Benutzer des daneben liegenden Fluggastsitzes die glatte Oberseite der Platte 9 zu. Wird die Platte 9 aus dieser Trennstellung manuell noch weiter aufwärts geschwenkt, bis die zweite Schwenkachse 27 an der Verbindungsstelle zwischen Arm 17 und Fortsatz 19 zumindest näherungsweise die Horizontalstellung erreicht hat, dann kann die Platte 9 in die Horizontalstellung geklappt werden, in der die Oberfläche der Platte 9 als Tischfläche fungieren kann.

Hierfür kann die Platte 9 durch Verschieben längs der Führungsschienen 37 relativ zum Arm 17 in die Optimalstellung gebracht werden, gegebenenfalls durch leichtes Verdrehen zwischen Drehteller 41 und Platte 9. Die Drehlagerung zwischen Drehteller 41 und Platte 9 kann mit einer leichten Drehverrastung versehen sein, um bevorzugte relative.Drehstellungen vorzugeben.

Wie aus Fig. 1 zu entnehmen ist, ist hinter der Platte 9 als zusätzliches Trennelement eine weitere Platte 43 vorgesehen. Diese ist im Bereich der Rückenlehne 3 aus der Konsole 1 ausschwenkbar. Fig. 1 zeigt die zusätzliche Platte 43 in der ausgefahrenen Stellung. Die in der Konsole 1 schwenkbar gelagerte, zusätzliche Platte 43 kann mittels eines geeigneten Kraftantriebes, beispielsweise einer Gasdruckfeder, für die Ausfahr- oder Schwenkbewegung vorgespannt sein, wobei ein an der Konsole befindliches Steuerglied als Auslöser für die Schwenkbewegung vorgesehen sein kann und die Anordnung so getroffen sein kann, dass die Platte 43 manuell gegen die Ausfahrkraft zurückstellbar ist. Anstelle eines Steuergliedes könnte auch eine sogenannte Push-Push-Verrastung für die Platte 43 vorgesehen sein.

## Patentansprüche

1. Fluggastsitz mit Sitzkomponenten wie Sitzteil, Rückenlehne (3) und zumindest einer den Sitzteil seitlich begrenzenden, eine Armauflage bildenden Konsole (1) mit einer Aufnahme für eine Platte (9), die mit der Konsole (1) über einen Einstellmechanismus (11) gelenkig verbunden und durch diesen aus einer in der Konsole (1) versenkten Ruhestellung wahlweise in eine aus der Konsole (1) nach oben heraus gefahrene, die seitliche Begrenzung des Sitzteiles nach oben verlängernde Trennelementstellung und aus dieser in eine eine Tischfläche bildende Horizontalstellung einstellbar ist, **dadurch gekennzeichnet, dass** der Einstellmechanismus (11) als Träger für die Platte (9) einen Arm (17) aufweist, der mit der Konsole (1) um eine erste Achse (23) und eine mit dieser einen rechten Winkel einschließende zweite Achse (27) schwenkbar verbunden ist, von denen die erste Achse (23) an der Konsole (1) ortsfest angeordnet ist und horizontal und zur Hauptebene der Konsole (1) senkrecht verläuft, wobei die Platte (9) am zugeordneten Ende des Armes (17) für eine in Richtung der zweiten Achse (27) verlaufende Verschiebebewegung bewegbar gelagert ist, und mit einer Federanordnung (25), die den Arm (17) für eine Schwenkbewegung um die erste Achse (23) im Sinne des Ausfahrens der Platte (9) aus der Konsole (1) vorspannt,
wobei eine steuerbare Riegeleinrichtung (13,31,33,35) zum lösbaren Festlegen der Platte (9) in der Ruhestellung vorhanden ist und dass die Riegeleinrichtung ein durch Federkraft (29) in die Sperrstellung vorgespanntes, bewegbares Riegelglied (13) aufweist, das durch einen Seilzug (31) aus der Sperrstellung bewegbar ist, der durch ein an der Konsole (1) befindliches Steuerglied (35) betätigbar ist.

2. Fluggastsitz nach Anspruch 1, **dadurch gekennzeichnet, dass** der Arm (17) an seinem der Konsole (1) zugeordneten Ende durch einen Fortsatz (19) verlängert ist, der mit dem Arm (17) um die zweite Achse (27) schwenkbar gelenkig verbunden ist.

3. Fluggastsitz nach Anspruch 2, **dadurch gekennzeichnet, dass** der Fortsatz (19) mit der Konsole (1) um die erste Achse (23) schwenkbar verbunden ist.

4. Fluggastsitz nach einem der Ansprüche 1 bis 3, **dadurch gekennzeichnet, dass** die Federanordnung eine auf der ersten Achse (23) angeordnete, ein Drehmoment am Fortsatz (19) des Armes (27) erzeugende Schrauben-Drehfeder (25) aufweist.

5. Fluggastsitz nach einem der Ansprüche 1 bis 4, **dadurch gekennzeichnet, dass** die verschiebbare Lagerung der Platte (9) am Ende des Armes (17) durch zwei an der Platte (9) befindliche gerade Führungsschienen (37), die im gegenseitigen Abstand voneinander in Verschieberichtung verlaufen, sowie durch am Arm (17) befindliche, in den Führungsschienen (37) geführte Führungskörper (39) gebildet ist, von denen zumindest in einer Führungsschiene (37) zwei in einem Abstand voneinander angeordnet sind.

6. Fluggastsitz nach Anspruch 5, **dadurch gekennzeichnet, dass** als Führungskörper am Arm (17) Führungsrollen (39) und als Führungsschienen an der Platte (9) Profilleisten (39) vorgesehen sind, durch deren Profilform die Führungsrollen (39) in Verschieberichtung zwangsgeführt und gegen Aushebung aus den Führungsschienen (37) gesichert sind.

7. Fluggastsitz nach Anspruch 6, **dadurch gekennzeichnet, dass** die Führungsschienen (37) an einem mit der Platte (9) drehbar verbundenen Drehteller (41) angebracht sind.

8. Fluggastsitz nach einem der Ansprüche 1 bis 7, **gekennzeichnet durch** eine zweite Platte (43), die als zusätzliches Trennelement hinter der anderen Platte (9) im Bereich von Rückenlehne (3) und Kopfstütze (5) aus der Konsole (1) in eine nach oben geschwenkte Trennelementstellung ausfahrbar ist.

## Claims

1. Aircraft passenger seat with seat components, such as a seat part, backrest (3) and at least one console (1) which laterally delimits the seat part, forms an armrest and has a receptacle for a plate (9), which is connected in an articulated manner to the console (1) via an adjustment mechanism (11) and can be optionally adjusted by the latter from an inoperative position, in which it is recessed in the console (1), into a partition element position, in which it is raised out of the console (1) and upwardly extends the lateral delimitation of the seat part, and from said position into a horizontal position, in which it forms a table surface, **characterized in that** the adjustment mechanism (11) has, as a support for the plate (9), an arm (17) which is connected to the console (1) in a manner such that it can pivot about a first axis (23) and a second axis (27) which encloses a right angle with the latter, of which axes the first axis (23) is arranged in a positionally fixed manner on the console (1) and extends horizontally and perpendicularly to the main plane of the console (1), with the plate (9) being mounted movably at the associated end of the arm (17) for a translation movement in the direction of the second axis (27), and with a spring arrangement (25) which prestresses the arm (17) for a pivoting movement about the first axis (23) for deploying the plate (9) out of the console (1), there being a controllable locking device (13, 31, 33, 35) for releasably securing the plate (9) in the inoperative position, the locking device having a movable locking element (13) which is prestressed into the blocking position by spring force (29) and can be moved out of the blocking position by means of a cable pull (31) which can be actuated by means of a control element (35) located on the console (1).

2. Aircraft passenger seat according to Claim 1, **characterized in that** the arm (17) is extended at its end which is associated to the console (1) by means of an extension (19) which is connected in an articulated manner to the arm (17) in a manner such that it can pivot about the second axis (27).

3. Aircraft passenger seat according to Claim 2, **characterized in that** the extension (19) is connected to the console (1) in a manner such that it can pivot about the first axis (23).

4. Aircraft passenger seat according to one of Claims 1 to 3, **characterized in that** the spring arrangement has a helical torsion spring (25) which is arranged on the first axis (23) and produces a torque on the extension (19) of the arm (27).

5. Aircraft passenger seat according to one of Claims 1 to 4, **characterized in that** the displaceable mounting of the plate (9) at the end of the arm (17) is formed by two rectilinear guide rails (37) which are located on the plate (9) and extend at a mutual distance from each other in the direction of displacement, and by guide bodies (39) which are located on the arm (17), are guided in the guide rails (37) and of which two are arranged at a distance from each other at least in one guide rail (37).

6. Aircraft passenger seat according to Claim 5, **characterized in that** guide rollers (39) are provided as guide bodies on the arm (17) and profiled strips (39) are provided as guide rails on the plate (9) and, by means of the profiled shape of said profiled strips, the guide rollers (39) are forcibly guided in the direction of displacement and are secured against lifting out of the guide rails (37).

7. Aircraft passenger seat according to Claim 6, **characterized in that** the guide rails (37) are provided on a rotary plate (41) which is connected rotatably to the plate (9).

8. Aircraft passenger seat according to one of Claims 1 to 7, **characterized by** a second plate (43) which, as an additional separating element behind the other plate (9) in the region of the backrest (3) and headrest (5), can be deployed out of the console (1) into an upwardly pivoted separating element position.

## Revendications

1. Siège pour passager d'avion avec des composants de siège comme une partie d'assise, un dossier (3) et au moins une console (1) délimitant latéralement la partie d'assise et formant un accoudoir, avec un logement pour un plateau (9) qui est connecté de manière articulée à la console (1) par le biais d'un mécanisme d'ajustement (11) et qui peut être ajusté par celui-ci d'une position de repos encastrée dans la console (1) au choix dans une position ressortie vers le haut depuis la console (1), dans laquelle position le plateau (9) forme un élément de séparation, prolongeant vers le haut la délimitation latérale de la partie d'assise, et de cette position dans une position horizontale formant une surface de table, **caractérisé en ce que** le mécanisme d'ajustement (11) présente, en tant que support pour le plateau (9), un bras (17), qui est connecté à la console (1) de manière à pouvoir pivoter autour d'un premier axe (23) et d'un deuxième axe (27) formant avec le premier un angle droit, dont le premier axe (23) est disposé fixement sur la console (1) et s'étend horizontalement et perpendiculairement au plan principal de la console (1), le plateau (9) étant monté à l'extrémité associée du bras (17) de manière à pouvoir être déplacé en translation dans la direction du deuxième axe (27), et comprenant un agencement de ressort (25) qui précontraint le bras (17) en vue d'un mouvement de pivotement autour du premier axe (23) pour la sortie du plateau (9) hors de la console (1), un dispositif de verrouillage commandable (13, 31, 33, 35) étant prévu pour la fixation desserrable du plateau (9) dans la position de repos, et le dispositif de verrouillage présentant un organe de verrouillage déplaçable (13) précontraint par une force de ressort (29) dans la position bloquée, lequel peut être déplacé hors de la position bloquée par un câble Bowden (31), qui peut être actionné par un organe de commande (35) se trouvant sur la console (1).

2. Siège pour passager d'avion selon la revendication 1, **caractérisé en ce que** le bras (17) est prolongé au niveau de son extrémité associée à la console (1) par une projection (19) qui est connectée de manière articulée au bras (17) de manière à pouvoir pivoter autour du deuxième axe (27).

3. Siège pour passager d'avion selon la revendication 2, **caractérisé en ce que** la projection (19) est connectée à la console (1) de manière à pouvoir pivoter autour du premier axe (23).

4. Siège pour passager d'avion selon l'une quelconque des revendications 1 à 3, **caractérisé en ce que** l'agencement de ressort présente un ressort pivotant hélicoïdal (25) disposé sur le premier axe (23) et produisant un couple sur la projection (19) du bras (27).

5. Siège pour passager d'avion selon l'une quelconque des revendications 1 à 4, **caractérisé en ce que** le support déplaçable en translation du plateau (9) à l'extrémité du bras (17) est formé par deux rails de guidage (37) droits situés sur le plateau (9), qui s'étendent à distance opposée l'un de l'autre dans la direction de translation, ainsi que par des corps de guidage (39) se trouvant sur le bras (17) et guidés dans les rails de guidage (37), dont deux sont disposés à distance l'un de l'autre au moins dans un rail de guidage (37).

6. Siège pour passager d'avion selon la revendication 5, **caractérisé en ce que** l'on prévoit en tant que corps de guidage sur le bras (17) des galets de guidage (39) et en tant que rails de guidage sur le plateau (9) des nervures profilées (39) dont la forme profilée force le guidage des galets de guidage (39) dans la direction du déplacement en translation et les empêchent de ressortir des rails de guidage (37).

7. Siège pour passager d'avion selon la revendication 6, **caractérisé en ce que** les rails de guidage (37) sont montés sur un plateau tournant (41) connecté de manière rotative au plateau (9).

8. Siège pour passager d'avion selon l'une quelconque des revendications 1 à 7, **caractérisé par** un deuxième plateau (43), qui peut être ressorti sous forme d'élément de séparation supplémentaire derrière l'autre plateau (9) dans la région du dossier (3) et de l'appui-tête (5), hors de la console (1) dans une position pivotée vers le haut, dans laquelle le deuxième plateau (43) forme un élément de séparation.
